# EUROPÄISCHE PATENTSCHRIFT

(11) **EP 0 340 625 B1**
(45) Veröffentlichungstag und Bekanntmachung des Hinweises auf die Patenterteilung: **20.10.1993**
(21) Anmeldenummer: 89107603.6
(22) Anmeldetag: 27.04.1989
(51) Int. Cl.: F16K 31/08, F16K 31/10

(54) **Magnetventil**
Magnetic valve
Electrovanne

(30) Priorität: 30.04.1988 DE 3814765
(43) Veröffentlichungstag der Anmeldung: 08.11.1989
(73) Patentinhaber: Fuchs, Franz, D-85521 Ottobrunn (DE)
(72) Erfinder: Fuchs, Franz, D-85521 Ottobrunn (DE)
(74) Vertreter: Hinrichsen, Ludwig

(56) Entgegenhaltungen:
- EP-A- 0 219 572
- DE-A- 2 244 717
- DE-A- 2 359 998
- US-A- 3 420 492
- US-A- 3 951 378

## Beschreibung

Die Erfindung bezieht sich auf ein Magnetventil entsprechend dem Oberbegriff des Anspruchs 1.

Ein derartiges Magnetventil, ist bereits in der US -PS-3.951.378 beschrieben. Dort ist der Permanentmagnet zum Festhalten (Latchen) des Ankers in zumindest einer Endlage im Magnetkreis einer zur Betätigung des Ventils erforderlichen ersten Spule (Elektromagnet) angeordnet. Das hat den Nachteil, daß die Wirkung des Permanentmagneten auf den Anker zur Aufbringung der Latch-Kraft stark gemindert und der Magnetkreis des Elektromagneten heim Betätigen des Ventils gestört wird, da der Permanentmagnet im Magnetkreis der Spule liegt. Um die Wirkung des Permanentmagneten auf den Anker in der Ausgangsposition des Ventils ("unlatched") in Richtung Öffnen zu minimieren, wird ein zweiter Permanentmagnet angeordnet, der im Bypass zum Anker einen magnetischen Kurzschluß hervorruft. Beim Schalten des Ventils wird durch die Gegeninduktion einer weiteren Spule ein magnetischer Widerstand erzeugt, so daß der magnetische Hauptfluß der ersten Spule über den Anker geleitet wird. Darüber hinaus sind die Ventile bekannter Art derart ausgebildet, daß sowohl der Magnetfluß der Spule zum Betätigen des Ventils als auch der Permanentmagnetfluß radial in den Anker eingeleitet und nur an einer Seite des Ankers stirnseitig zurück zum Magnetgehäuse geleitet werden. Sie weisen also nur einen, dem Anker gegenüberliegenden Dipol auf, so daß Axialkräfte, sowohl durch die Betätigungsspule als auch durch den Permanentmagneten nur in einer Richtung auf den Anker aufgebracht werden können. Kräfte in die entgegengesetzte Richtung wie Dichtungskräfte, Betätigungskräfte müssen also durch andere Mittel, wie z.B. Feder- oder Druckkräfte aufgebracht werden.

Die Aufgabe der Erfindung besteht darin, ein Magnetventil der eingangs genannten Art so auszubilden, daß obige Nachteile vermieden werden, nur Kleine gut nutzbare Querschnitte für den Anker und Elektromagneten erforderlich sind, die elektromagnetische Kraft zum Betätigen des Ventils gering ist und sowohl eine monostabile als auch bistabile Funktion möglich ist. Diese Aufgabe ist erfindungsgemäß gelöst durch die kennzeichnenden Merkmale des Anspruchs 1. Vorteilhafte Weiterbildungen der Erfindung sind durch die Unteransprüche wiedergegeben. Die Lösung der Aufgabe wird dadurch bewirkt, daß der Permanentmagnet konzentrisch zwischen Anker und Elektromagnetkreis angeordnet ist und somit keinen Widerstand für letzteren darstellt. Den Ankerstirnflächen ist jeweils eine gegenüberliegende, magnetisch leitende Fläche des Gehäuses, ein unteres und oberer Dipol zugeordnet.

In der Schließstellung wird der Magnetfluß des zum Anker konzentrisch angeordneten Magneten in kurzem Kreis ohne Streuverlust über den unteren Dipol axial in den Anker eingeleitet und bewirkt hiermit die Schließkraft auf den Anker. In der Offenstellung wird der Permanentmagnetfluß über das Gehäuse und den oberen Dipol axial über den Anker geleitet und bewirkt hiermit die Offen-Haltekraft auf den Anker.

Der zur Betätigung des Ventils durch die Spule erzeugte Elektromagnetfluß wird über das magnetische leitende Gehäuse, sowie über den unteren und oberen Dipol axial durch den Anker geleitet. Der wesentliche Vorteil der Erfindung besteht nun in der Anordnung der auf den Anker wirkenden Federn, in denen der größte Teil der auf den Anker wirkenden Magnetkraft des Permanentmagneten in beiden Ventilendlagen gespeichert wird.

Die Bistabilität wird dadurch erzielt , daß in der Offenstellung des Ventils die Federkraft unterhalb der auf den Anker wirkenden Permanentmagnetkraft eingestellt wird.

Ein weiterer Vorteil der Erfindung liegt darin, daß durch die Anordnung von zwei Dipolen zusätzlich zu den Federkräften, die beim Einschalten des Elektromagneten freiwerden, eine elektromagnetische Kraft über den jeweils entgegengesetzt liegenden Dipol und den Luftspalt als Betätigungskraft wirksam wird.

In der Zeichnung sind Ausführungsbeispiele der Erfindung schematisch dargestellt. Es zeigen:
**Fig. 1** ein erstes Ausführungsbeispiel eines Magnetventils mit einer Tellerfeder und einer vorgeschalteten Schraubenfeder in zwei verschiedenen Stellungen;
**Fig. 2** ein Diagramm der auf den Ventilstößel des Magnetventils nach Fig.1 wirkenden Kräfte in Abhängigkeit vom Arbeitshub;
**Fig. 3** ein zweites Ausführungsbeispiel eines Magnetventils mit einer Keilfeder und einer Tellerfeder in zwei verschiedenen Stellungen und
**Fig. 4** ein Diagramm entsprechend Fig. 2 für das Magnetventil nach Fig. 3.

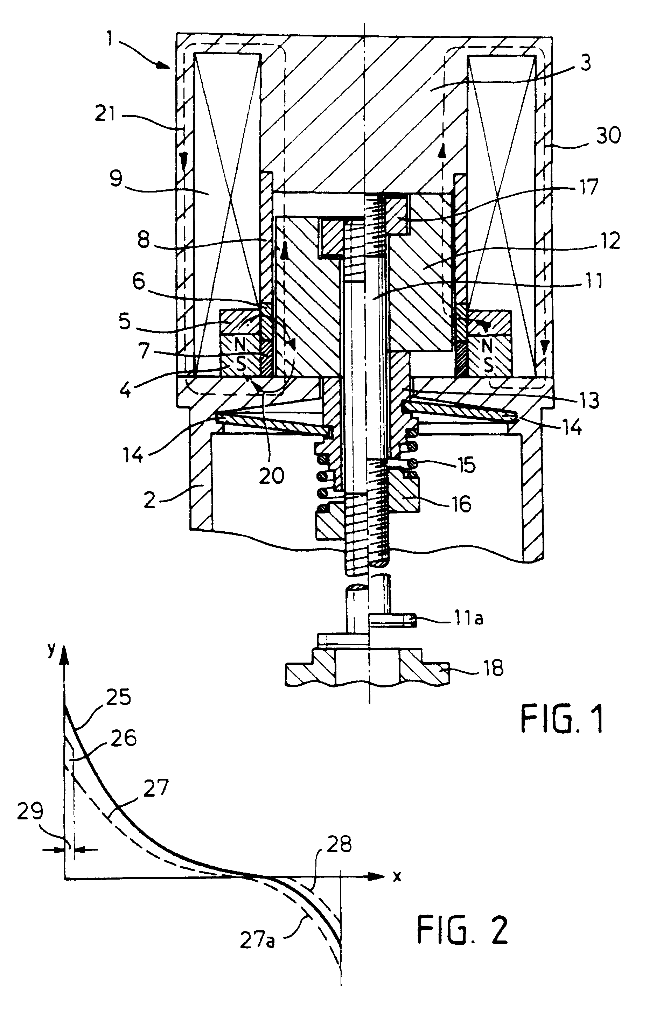

Die Fig. 1 zeigt ein Magnetventil 1 mit einem Gehäuse 2 mit Magnetdipol und einem Gehäusedeckel 3 mit Magnetdipol und nachfolgenden, starr eingebauten Teilen:
einem axial magnetisierten Permanentmagneten 4 in Ringform
eine magnetisch leitende Scheibe 5,
einen magnetisch leitenden Ring 6,
zwei nicht leitende Führungshülsen 7 und 8 und eine Elektrospule 9.
Die übrigen im Gehäusedeckel 3 eingebauten beweglichen Teile sind zur besseren Erläuterung der Funktionen des Magnetventils 1 in zwei verschiedenen Stellungen dargestellt. Die von der Mittellinie aus linke Darstellung zeigt das geschlossene, die rechte Darstellung das geöffnete Ventil. Diese beweglichen Teile sind:
ein Ventilstößel 11 mit Ventilteller 11a,
ein Anker 12,
eine Hülse 13,
eine Tellerfeder 14,
eine Schraubenfeder 15,
ein Einstellring 16 und
ein Stellring 17.
Der Ventilteller 11a wirkt auf den Sitz einer Flüssigkeitsleitung 18.
Die Kraftlinien 20 des zum Anker konzentrisch angeordneten Permanentmagneten 4 gehen im Uhrzeigersinn von Nord nach Süd, ausgehend von dem Magneten 4, durch die Scheibe 5, den magnetisch leitenden Ring 6, den Anker 12 und den unteren Dipol und Gehäuse 2 zurück zum Permanentmagneten 4. Dabei wirkt praktisch die gesamte Magnetkraft im Luftspalt Null zwischen dem Anker 12 und dem unteren Dipol auf den Anker 12. Der überwiegende Teil dieser Magnetkraft wird über die Hülse 13 in der Tellerfeder 14 gespeichert. Die Schraubenfeder 15 dient zum Aufbringen einer definierten Zusatzkraft auf den Ventilstößel 11 z.B. als Ventilsitz-Dichtkraft. Der Ventilstößel 11 ist im Anker 12 gleitend gelagert. Zum Abheben des Ventiltellers 11a vom Sitz 18, also zur Öffnung des Magnetventils 1 wird die Spule 9 unter Strom gesetzt, sodaß ein elektromagnetischer Fluß 21 entsteht, der über den Gehäusedeckel 3, das Gehäuse 2, den unteren Dipol, den Anker 12 und den Luftspalt zwischen Anker 12 und dem oberen Dipol zurück zum Gehäusedeckel 3 geht und in seiner Richtung der Magnetkraft 20 des Permanentmagneten 4 zwischen Anker 12 und dem unteren Dipol des Gehäuses 2 entgegenwirkt. Hierdurch wird die Magnetkraft 20 im Luftspalt Null zwischen Anker 12 und unteren Dipol abgebaut und im Anker 12 über den Luftspalt zwischen Anker 12 und dem oberen Dipol des Gehäusedeckels 3 eine elektromagnetische Kraft aufgebaut. Die magnetisch nicht leitenden Hülsen 7 und 8 verhindern dabei einen magnetischen Nebenfluß der Spule 9 und des Permanentmagneten 4.

Da der Permanentmagnet 4 nicht im elektromagnetischen Kreis liegt, genügt zum Abbau der Magnetkraft 20 im Ankerspalt Null zum Freisetzen der in der Schließstellung des Ventils gespeicherten Federkräfte eine geringe Induktion der Spule 9. Zum Öffnen des Ventils wirken nun die freigesetzten Federkräfte und die zwischen Anker 12 und dem oberen Dipol aufgebaute elektromagnetische Kraft.

Der Verlauf der am Ventilstößel 11 auftretenden Kräfte in Abhängigkeit vom Ankerhub ist in dem Diagramm der Fig. 2 dargestellt. Dabei sind auf der Abzisse x der Ankerhub und auf der Ordinate y die Kräfte aufgetragen. Die Kurve 25 stellt die Magnetkraft des Permanentmagneten 4 dar, die mit größer werdendem Ankerhub laufend abnimmt. Die gestrichelten Kurven stellen Federkräfte dar. Hierbei bedeutet das kleine Kurvenstück 26 die in der Schraubenfeder 15 gespeicherte Zusatzkraft, die Kurve 27 die Federkraft der Tellerfeder 14. Die Kurve 27a stellt die auf monostabile Ventilfunktion und die Kurve 28 die auf bistabile Funktion eingestellte Federkraft der Tellerfeder 14 dar. Nach Abbau der Magnetkraft 25 auf die Summe der Kräfte 26 und 27 bewegt sich der Anker 12 nach oben und hebt sich der Ventilteller 11a vom Sitz 18 ab. Der Ankerhub durchläuft dabei das Stück 29 auf der x-Achse, das dem Spalt zwischen dem Einstellring 16 und der Hülse 13 entspricht. Danach unterstützt die Federkraft 27 alleine das Öffnen des Ventils und der weitere Feldaufbau durch die Spule 9 führt zur Minderung der Magnetkraft 25. Wird Letztere auf Null abgebaut, wirkt die gesamte Federkraft 27 auf den Ventilstößel 11 als Betätigungskraft zum Abheben des Ventiltellers 11a vom Sitz 18. Nach Durchgang durch Null bauen sich die Kräfte schnell in entgegengesetzter Richtung auf bis zum vollständigen Öffnen des Ventils und dem Anliegen des Ankers 12 an den Gehäusedeckel 3. Es ergeben sich dadurch kurze Betätigungszeiten und stark reduzierte Schaltstöße des Ankers 12. Der Magnetfluß 30 des Permanentmagneten verläuft hierbei (rechte Seite Fig.1) ausgehend vom Permanentmagneten 4 von Nord über Scheibe 5, den Anker 12, den oberen Dipol und über Gehäusedeckel 3 und Gehäuse 2 zurück zum Südpol des Permanentmagneten. Ist in der voll geöffneten Stellung des Ventilstößels 11 die Kraft der Feder 14 höher eingestellt als die Kraft des Permanentmagneten 4, verläuft die Federkraft also entsprechend der Kurve 27a, so kehrt der Anker 12 mit Stößel 11 nach Abschalten des Stromes in der Spule 9 in die Ausgangslage zurück, d.h. die Anordnung ist monostabil. Ist jedoch die Kraft der Feder 14 entsprechend der Federkraftkurve 28, verbleibt der Anker 12 in seiner eingenommenen Endlage entsprechend der rechten Seite der Fig. 1, die Anordnung ist somit bistabil. Die Einstellung des Axialspiels zwischen dem Anker 12 und dem Stößel 11 erfolgt über den Stellring 17, der mit Gewinde auf das Ende des Stößels 11 geschraubt ist.

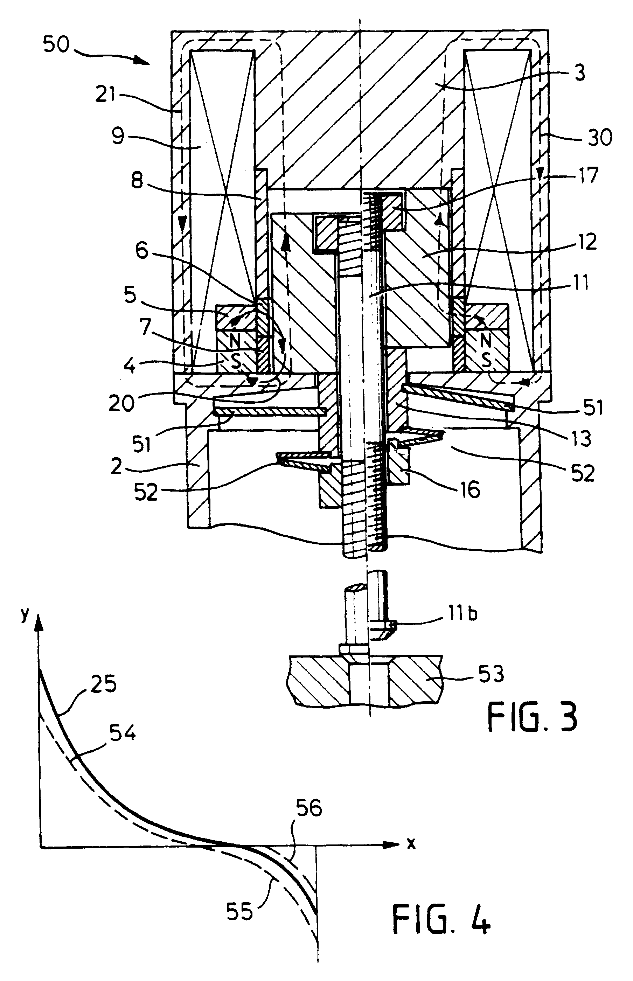

Die Federkraft für die monostabile und bistabile Funktion wird mit Hilfe des, ebenfalls mit Gewinde auf den Ventilstößel geschraubten Einstellrings 16 vorgenommen. Bei bistabiler Funktion der Feder 14 erfolgt die Bewegung des Ankers 12 mit dem Ventilstößel 11 in ihre Ausgangslage durch Umpolung des Stroms in der Spule 9 oder auch, in nicht dargestellter Anordnung, durch Erregung einer weiteren Spule mit entgegengesetzter Polarisierung. Die Fig. 3 zeigt als weiteres Ausführungsbeispiel ein Magnetventil 50, bei dem wie bei der Fig. 1 die Stellung links von der Mittellinie das geschlossene und rechts von der Mittellinie das geöffnete Ventil 50 darstellt. Unterschiedlich zu Fig. 1 sind die Art und Anordnung der Federn. Es ist wiederum eine Tellerfeder 51 vorhanden, die jedoch bei geschlossenem Ventil 50 nicht vorgespannt ist. Dafür speichert eine Kegelfeder 52 alleine die Magnetkraft 20 des Permanentmagneten 4 über die Hülse 13. Am Ventilstößel 11 befindet sich hier ein Ventilteller 11b mit konischer Dichtfläche, die sich in einen entsprechenden Ventilsitz 53 einpaßt. In der Fig. 4 ist wiederum die Magnetkraft 25 des Permanentmagneten 4 aufgetragen. Die gestrichelte Linie 54 stellt die Kraft der Feder 52 dar, die beim Durchgang durch Null ihre Kraft vollständig an den Ventilstößel 11 abgegeben hat. Die Linie 55 entspricht der Federkraft der erst ab Nullstellung wirksamen Feder 51 bei monostabiler Funktion. Die Linie 56 stellt die entsprechende Federkraft der Feder 51 bei bistabiler Funktion dar.

## Patentansprüche

1. Ventil zum Abdichten von unter Druck stehenden Leitungen mit einem Elektromagneten (9), zum Betätigen des Ventils (1) und einem Permanentmagneten (4) dessen magnetische Flußlinien axial durch mindestens eine Stirnfläche des Ankers (12) und radial durch einen Teil des magnetisch leitenden Gehäuses (3) verlaufen, wobei in der geschlossenen Stellung des Ventils (1) die Magnetkraft (25) des Permanentmagneten (4) überwiegend als Federkraft (26), (27) gespeichert ist, die mit einer etwas geringeren, der Magnetkraft entgegengesetzt gerichteten Kraft auf den Ventilstößel (11) einwirkt, wobei zum Betätigen des Ventils die Kraft des einschaltbaren Elektromagneten (9) die Magnetkraft (25) des Permanentmagneten (4) derart abbaut, daß die Federkraft (26), (27) wirksam wird; dadurch gekennzeichnet, daß der Permanentmagnet (4) konzentrisch zum Anker (12) und innerhalb des Magnetkreises (21) des Elektromagneten (9) angeordnet und die Magnetkraft (25) des Permanentmagneten (4) in beiden Endstellungen des Ventils (1) auf die jeweilige Stirnseite des Ankers (12) einwirkt, die Magnetkräfte (25) in beiden Endstellungen des Ventils (1) jeweils als Federkraft (26,27,28), entgegen der Kraft des Permanentmagneten (4) wirkend, gespeichert werden und daß zum Schalten des Ventils die Kraft des Magnetkreises (21) des Elektromagneten (9) die Magnetkraft (25) des Permanentmagneten (4) jeweils bis unterhalb der in den Entstellungen des Ventils wirkenden Federkräfte (26,27,28) abbaut (bistabil) und bei einer Federkraft (27a, 55), die in der der Offenen Stellung entsprechenden Endlage größer ist als die Kraft (25) des Permanentmagneten (4) das Ventil (1) (50) nach Abschalten des Elektromagneten (9) selbsttätig in die andere Endlage schaltet (monostabil).

2. Ventil nach Anspruch 1 dadurch gekennzeichnet, daß die Magnetkraft (25) in einer, aus der ungespannten Lage beidseitig wirkenden Tellerfeder (14) gespeichert ist, sodaß diese sowohl bei geschlossenem wie offenem Ventil unter Vorspannung steht, die der Magnetkraft jeweils entgegenwirkt.

3. Ventil nach Anspruch 1 dadurch gekennzeichnet, daß die Magnetkraft (25) in der geschlossenen Stellung des Ventils in zwei Federn gespeichert ist, wobei der ersten Feder (14) eine zweite, nur in einer Richtung zu spannende Feder, z.b. eine Schraubenfeder (15) vorgeschaltet ist.

4. Ventil nach Anspruch 1, **dadurch gekennzeichnet,** daß zwei Federn angeordnet sind, von denen nur in einer ersten Feder, z.B. einer Kegelfeder (52), die Magnetkraft (25) als Federkraft (54) gespeichert ist, die bereits vor dem vollständigen öffnen des Ventils (50) abgebaut ist, und daß eine zweite Feder, z.B. eine Tellerfeder (51) nach Abbau der Federkraft der ersten Feder durch das weitere Öffnen des Ventils eine entgegengesetzt gerichtete Federkraft (55 oder 56) erhält.

5. Ventil nach einem oder mehreren der Anspruche 1-4, dadurch gekennzeichnet, daß bei geöffnetem Ventil (1, 50) die Federkraft (28,56) geringer ist als die Magnetkraft (25) des Permanentmagneten (4). (Bistabile Anordnung).

6. Ventil nach einem oder mehreren der Anspruche 1 - 4 , dadurch gekennzeichnet, daß bei geöffnetem Ventil (1,50) die Federkraft (27a,55) größer ist als die Magnetkraft (25) des Permanentmagneten (4). (Monostabile Anordnung).

7. Ventil nach einem oder mehreren der Ansprüche 1 bis 6, **dadurch gekennzeichnet,** daß das Ventil (1, 50) ein zylindrisches Gehäuse (2) aufweist, in dem der Ventilstößel (11) in einem Führungsring (13) gleitbar gelagert ist und der Führungsring über einen mit Gewinde auf den Ventilstößel geschraubten Einstellring (16) auf den Ventilstößel wirkt, wobei der Führungsring auch zur Lagerung der Federn (14, 15, 51, 52) dient und direkt zwischen dem Führungsring und dem Einstellring eine der Federn (15, 52) angeordnet ist, und daß auf dem Gehäuse in einem Gehäusedeckel (3) der Anker (12), der Permanentmagnet (4), die Spule (9) des Elektromagneten und ein am Ende des Ventilstößels aufgeschraubter Stellring (17) untergebracht sind, wobei der Gehäusedeckel zugleich als Eisenkern für den Elektromagneten dient.

## Claims

1. Solenoid valve for sealing a pressurized conduit, with an electromagnet (9), for operating the valve (1) and a permanent magnet (4), transferring its magnetic flux axially through at least one end secton surface of the armature (12) and radially through one part of the magnetic flux contacting housing (3), thereby in the closed position of the valve (1), the magnetic force (25) of the permanentmagnet (4) is primarily stored as a spring force (26, 27), which is effective on the valve stem (11) in a direction, opposite to the magnetic force (11), whereby for valve operation, the force of the energized electromagnet (9) reduces the permanent magnetic force (25) of the permanenmagnet (4) in such a way, that the spring force (26, 27) becomes effective; **characterized in**, that the permanent magnet (4) is arranged concentrically to the armature (12) and within the magnetic circuit (21) of the electromagnet (9) and the magnetic force (25) of the permanent magnet (4), acts in both end positions of the valve (1) on the repective end section surface of the armature, the magnetic forces (25) in both end positions of the valve (1) will be stored at each end position as spring force (26, 27, 28,) acting opposite to the permanent magnetic force (4) and that, for valve operation, the magnetic force of the magnet circuit (21) of the electromagnet (9) reduces the magnetic force (25) of the permanent magnet (4), in each case to below that of the spring forces (26, 27,28), acting at the end positions of the valve (bistable) and with a spring force (27a, 55), which is in that position, corresponding to the open end position larger, than the force (25) of the permanent magnet (4), the valve (1, 50) switches after cutting-off of the electro-magnet (9), automatically back to the other end position (monostable).

2. Valve according to claim 1, **characterized in**, that the magnetic force (25) is stored, starting from the unloaded position, in a bilateral acting Belleville spring (14), so, that this spring is under load in the closed as well as in the open position and acts opposite to the respective magnetic force on each side.

3. Valve according to claim 1, **characterized in**, that the magnetic force (25) in the closed position of the valve is stored in two springs, whereby to the first spring (14), a second, only in one direction tensible spring, f. e. a helical sprig (15), is arranged in series.

4. Valve according to claim 1, **characterized in**, that two springs are arranged; of those only in a first spring, f. e. a conical spiral spring (52), the magnetic force (25) is stored as spring force (54), which is already nullified prior to complete opening of the valve (50) and that a second spring f. e. a Belleville spring (51), after relaxing of the spring force of the first spring and in response to the further opening of the valve, builds up an opositely directed spring force (55 or 56).

5. Valve according to one or more of claim 1-4, **characterized in**, that in valve (1, 50) open position, the spring force (28, 56) is smaller than the magnetic force (25) of the permanentmagnet (4) (bistable arrangement).

6. Valve according to one or more of claims 1-4, **characterized in**, that in valve (1, 50) open position, the spring force (27a, 55) is larger than the magnetic force (25) of the permanentmagnet (4) (monostable arrangement).

7. Valve according to one or more of claims 1-6, **characterized in**, that the valve (1, 50) comprises a cylindrical housing , wherein the valve stem (11) is guided in a guide sleeve (13) and the guide sleeve acts via a, with threading on the valve stem screwed (attached) adjustment member (16), on the valve stem, whereby the guide sleeve is serving further as bearing for the springs (14, 15, 51, 52) and, directly between the guide sleeve and the adjustment member, one of the springs (15, 52) is arranged, and that on the housing, in a housing cover (3), the armature (12), the permanent magnet (4), the coil (9) of the electromagnet and a, to the end of the valve stem bolted adjustment ring (17), are housed, whereby the housing cover serves as well as iron core for the electromagnet.

## Revendications

1. Vanne d'étanchement pour conduits sous pression, comprenant un électro-aimant (9) pour la commande de la Vanne (1) et un aimant permanent (4) dont les lignes de flux magnétique concentré traversent axialement l'armature (12), passant au minimum par sa surface frontal et radialement une partie du corps conducteur magnétique (3) et en position fermée de la vanne (1), la force magnétique (25) de l'aimant permanent (4) est principalement accumulée en tant que force élastique (26, 27) qui, avec une force opposée et légèrement inférieure à la force magnétique, agit sur le poussoir (11), et pour la commande de la vanne, la force de l'electro-aimant (9) connectable réduit la force magnétique (25) de l'aimant permanent (4) jusqu'à une valeur légèrement inférieure à la force élastique (26, 27) accumulée; **caractérisée par le fait**, que l'aimant permanent (4) est disposé de facon concentrique à l'armature (12) et à l'intérieur du circuit magnétique (21) de l'électro-aimant (9) et que la force magnétique (25) de l'aimant permanent agit, dans les deux positions finales de la vanne (1), sur les surfaces frontales de l'armature (12), les forces magnétiques (25), étant dans les deux positions finales de la vanne (1) accumulé en tant que force élastique (26, 27, 28), contrant la forc de l'aimant permanent (4) et qu'en commande de la vanne, la force du circuit magnétique (21) de l'électro-aimant (9) connectable réduit la force magnétique de l'aimant permanent (4) juiqu'à une valeur légèrement inférieure au forces élastiques (26, 27, 28) accumulée dans les positions finales de la vanne (bistable) et que en position ouvert, la force élastque (27a, 55) est supériore à la force magnétique (25) de l'aimant permanent (4), après déconnection de l'électroaiment (9) la vanne (1, 50), s'actionne automatiquement jusqu'à sa position finale (monostable).

2. Vanne selon la revendication 1, **caractérisée par le fait,** que la force magnétique (25) est accumulée dans une rondelle "Belleville" (14) pouvant à l'état d'écoulement libre travailler dans les deux sens, c'est à dire, etant soumise à une précontrainte à l'état fermé comme à l'état ouvert de la vanne; précontrainte qui s'opposé à la force magnétique.

3. Vanne selon la revendication 1, **caractérisée par le fait** que la force magnétique (25) est accumulée en position fermée de la vanne (1) dans deux ressorts, en amont du premier ressort (14) étant monté un second ressort à courte course élastique ne se tendant que dans un seul sens, par exemple un ressort hélicoidal (15).

4. Vanne selon la revendication 1, **caractérisée par le fait** qu'il est prévu deux ressorts et que dans un premier ressort seulement, par exemple un ressort conique (52), la force magnétique (25) est accumulée en tant que force élastique (54); la force élastique qui est déjà réduite avant l'ouverture complète de la vanne (50) et un second ressort, par exemple une rondelle Belleville (51), est soumis á une force élastique (55 ou 56) dirigée dans le sens opposé après la réduction de la force élastique du premier ressort lors de la continuation de l'ouverture de la vanne.

5. Vanne selon l'une quelconque des revendications 1 à 4, **caractérisée par le fait**, que la vanne (1, 50) étant ouverte, la force élastique (28, 56) est plus faible que la force magnétique (25) de l'aimant permanent (4) (disposition bistable).

6. Vanne selon l'une quelconque des revendications 1 à 4, **caractérisée par le fait**, que la vanne (1, 50) étant ouverte, la force élastique (27a, 55) est plus importante que la force magnétique (25) de l'aimant permanent(4) (disposition monostable).

7. Vanne selon l'une quelconque des revendications 1 à 6, **caractérisée par le fait** que la vanne (1, 50) comporte un corps cylindrique (2) dans lequel le poussoir (11) est monté coulissant dans un manchon (13), lequel manchon agit sur le poussoir par l'intermédiaire d'un anneau de réglage (16), vissé par un filetage sur le poussoir, le manchon servant aussi au montage des ressorts 14, 15, 51, 52), et l'un des ressorts (15, 52) étant directement interposé entre le manchon et l'anneau de réglage et que l'armature (12), l'aimant permanent (4), la bobine (9) de l'électro-aimant et une bague de butee (17) vissée à l'extrémité du poussoir de la vanne, sont logés sur le corps dans un couvercle (3), le couvercle servant en même temps de noyau de fer pour l'électro-aimant.
